(19)

Europäisches
Patentamt
European
Patent Office
Office européen
des brevets

(11)     **EP 1 914 919 A1**

(12)     **EUROPEAN PATENT APPLICATION**
published in accordance with Art. 153(4) EPC

(43) Date of publication:
    **23.04.2008   Bulletin 2008/17**

(21) Application number: **06783271.7**

(22) Date of filing: **11.09.2006**

(51) Int Cl.:
    *H04J 15/00* (2006.01)          *H04B 1/707* (2006.01)
    *H04B 7/08* (2006.01)          *H04J 1/02* (2006.01)
    *H04J 11/00* (2006.01)

(86) International application number:
    **PCT/JP2006/317998**

(87) International publication number:
    **WO 2007/040018 (12.04.2007 Gazette 2007/15)**

(84) Designated Contracting States:
    **DE FR GB**

(30) Priority:  **05.10.2005   JP  2005292369**

(71) Applicant: **MITSUBISHI ELECTRIC**
    **CORPORATION**
    **Chiyoda-ku**
    **Tokyo 100-8310 (JP)**

(72) Inventor: **HIGASHINAKA, Masatsugu**
    **Tokyo 100-8310 (JP)**

(74) Representative: **Pfenning, Meinig & Partner GbR**
    **Patent- und Rechtsanwälte**
    **Theresienhöhe 13**
    **80339 München (DE)**

(54)     **RECEIVER APPARATUS**

(57)     A receiving apparatus according to the present invention is a receiving apparatus that demodulates a modulated signal received via a plurality of antennas, and includes a transmission-channel estimating unit (22) that estimates a transmission-channel response matrix in accordance with the quantity of antennas and the quantity of symbols based on a received signal vector; a hard-decision sequence estimating unit (21) that estimates a hard decision sequence based on the received signal vector and the transmission-channel response matrix, and outputs the hard decision sequence and likelihood information $\alpha$ corresponding to the hard decision sequence; and a soft-decision value creating unit (23-1 to 23-K) that creates likelihood information $\beta$ corresponding to a sequence that a specific bit in the hard decision sequence is inversed by using the received signal vector, a transmission-channel response matrix reconstructed by reducing the dimension of the transmission-channel response matrix, and the hard decision sequence, and creates a soft decision value of the hard decision sequence based on the likelihood information $\beta$ and the likelihood information $\alpha$.

FIG.2

EP 1 914 919 A1

**Description**

TECHNICAL FIELD

The present invention relates to a receiving apparatus that demodulates a received signal, and particularly relates to a receiving apparatus that demodulates a modulated signal received via a plurality of antennas.

BACKGROUND ART

Maximum likelihood detection is available as a data determination method for digital communication. The maximum likelihood detection is performed by a receiving apparatus (hereinafter referred to as a receiver). Specifically, the maximum likelihood detection including calculating metric between a received signal and a replica created based on a transmission channel response and a transmission symbol candidate, finding a replica that has the smallest metric from among all combinations, and outputting the transmission symbol candidate corresponding to the replica with the smallest metric as a determination result. The maximum likelihood detection has an excellent receiving-performance, however, generally requires an enormous complexity to calculate metrics of all conceivable combinations. As a technology to reduce such complexity, for example, reduced-complexity maximum likelihood detection is described in the following Non-Patent Document 1. Non-Patent Document 1, proposes to reduce the complexity in the maximum likelihood detection by restricting combinations of calculating metrics by some kind of technique.

On the other hand, the reduced-complexity maximum likelihood detection has a problem that it is difficult to calculate a soft decision value, which is used for error correction decoding. Generally, a soft decision value of each bit is calculated from a log likelihood ratio of the likelihood when the bit is "-1" to the likelihood when the bit is "+1". However, in the reduced-complexity maximum likelihood detection, metrics are not calculated for all replicas. Therefore, there is a possibility that none of the transmission symbol candidates for which metrics have been calculated includes a symbol containing "-1" or "+1". In such case, a soft decision value cannot be calculated. As a method to solve the problem of the reduced-complexity maximum likelihood detection, the technology described in the following Patent Document 1 is available. According to the technology described in Patent Document 1, first of all, a hard decision sequence is estimated by using the reduced-complexity maximum likelihood detection. Then, when calculating each soft decision value of each bit of the estimated hard decision sequence, by referring to a hard decision value of a subject bit of the calculation, a sequence having an inverse bit to the subject bit is estimated by using the reduced-complexity maximum likelihood detection. By repeating the operation the same number of times as a bit count transmitted at a time, likelihood information of "-1" and "+1" about all transmission bits is obtained. Accordingly, a soft decision value can be calculated even in the reduced-complexity maximum likelihood detection.

Non-Patent Document 1: Emanuele Viterbo, Joseph Boutros, "A Universal Lattice Code Decoder for Fading Channels", IEEE Transactions on Information Theory, Vol. 45, No. 5, pp.1639-1642, July 1999.
Patent Document 1: GB2406760A

DISCLOSURE OF INVENTION

PROBLEM TO BE SOLVED BY THE INVENTION

However, in the above conventional technology, when calculating a soft decision value according to the reduced-complexity maximum likelihood detection, first a hard decision sequence is estimated, and then the reduced-complexity maximum likelihood detection is repeated the same number of times as a bit count required to calculate a soft decision value. As a result, there is a problem that an enormous complexity is required.

The present invention is made to solve the above problem, and an object of the present invention is to obtain a receiving apparatus that can obtain a highly precise soft decision value with a less complexity according to the reduced-complexity maximum likelihood detection, and can provide satisfactory communication with a small circuit size.

MEANS FOR SOLVING PROBLEM

To solve the above problems and to achieve the objects, the present invention provides a receiving apparatus that demodulates a modulated signal received via a plurality of antennas and includes a transmission-channel estimating unit that estimates a transmission-channel response matrix in accordance with a quantity of antennas and a quantity of symbols based on a received signal vector, the received signal vector being a vector expression of a plurality of baseband digital signals obtained by performing certain receiving processing; a hard-decision sequence estimating unit that estimates a hard decision sequence based on the received signal vector and the transmission-channel response matrix, and outputs a hard decision sequence obtained as estimation result and first likelihood information corresponding to the hard decision sequence; and a soft-decision value creating unit that creates second likelihood information corresponding to a sequence that a specific bit in the hard decision sequence is inversed by using the received signal vector, a transmission-channel response matrix reconstructed by reducing a dimension of the transmission-channel response matrix, and the hard decision sequence, and creates a soft decision value of each bit in the hard decision sequence based on the second likelihood information and the first likelihood information.

EFFECT OF THE INVENTION

With the present invention, a highly precise soft decision value can be obtained through a simple process, and a receiver that can provide satisfactory communication even with a small-size circuit can be obtained.

BRIEF DESCRIPTION OF DRAWINGS

[Fig. 1] Fig. 1 is a diagram that depicts a configuration example of a receiver according to a first embodiment.

[Fig. 2] Fig. 2 is a diagram that depicts a configuration example of a digital-signal demodulation unit of the receiver according to the first embodiment.
[Fig. 3] Fig. 3 is a diagram that depicts a configuration example of a soft-decision value creating unit included in the digital-signal demodulation unit of the receiver according to the first embodiment.
[Fig. 4] Fig. 4 is a diagram that depicts a configuration example of a digital-signal demodulation unit of a receiver according to a second embodiment.
[Fig. 5] Fig. 5 is a diagram that depicts a configuration example of a soft-decision value creating unit included in the digital-signal demodulation unit of the receiver according to the second embodiment.
[Fig. 6] Fig. 6 is a diagram that depicts a configuration example of a soft-decision value creating unit included in a digital-signal demodulation unit of a receiver according to a third embodiment.
[Fig. 7] Fig. 7 is a diagram that depicts a configuration example of a digital-signal demodulation unit of a receiver according to a fourth embodiment.
[Fig. 8] Fig. 8 is a diagram that depicts a configuration example of a soft-decision value creating unit included in the digital-signal demodulation unit of the receiver according to the fourth embodiment.
[Fig. 9] Fig. 9 is a diagram that depicts a configuration example of a receiver according to a fifth embodiment.
[Fig. 10] Fig. 10 is a diagram that depicts a configuration example of a digital-signal demodulation unit of the receiver according to the fifth embodiment.
[Fig. 11] Fig. 11 is a diagram that depicts a configuration example of a soft-decision value creating unit included in the digital-signal demodulation unit of the receiver according to the fifth embodiment.
[Fig. 12] Fig. 12 is a diagram that depicts a configuration example of a receiver according to a sixth embodiment.
[Fig. 13] Fig. 13 is a diagram that depicts a configuration example of a soft-decision value creating unit included in a digital-signal demodulation unit of a receiver according to a seventh embodiment.

EXPLANATIONS OF LETTERS OR NUMERALS

10-1 to 10-N Antennas

11-1 to 11-N Analog-signal processing units
12-1 to 12-N A/D converting units
13, 13d, 13e Digital-signal demodulation unit
14 Deinterleave unit
15, 15d Decoding unit
21, 21c, 21d Hard-decision sequence estimating unit
22 Transmission-channel estimating unit
23-1 to 23-K, 23a-1 to 23a-K, 23c-1 to 23c-K, 23d-1 to 23d-
1K Soft-decision value creating units
31, 31b, 31f Vector subtraction unit
32, 32b Weight multiplication unit
33, 33b, 33f Signal determination unit
34, 34b, 34c, 34d Likelihood creating unit
35, 35b, 35c Soft-decision value calculating unit
36, 36a, 36f Weight creating unit
42 Parameter estimating unit

51 Replica creating unit
61 Memory unit
64 Memory referring device
71, 72 Adder
81-1 to 81-N FFT unit
82 Parallel-serial converting unit

BEST MODE(S) FOR CARRYING OUT THE INVENTION

Exemplary embodiments of a receiving apparatus according to the present invention will be explained below in detail with reference to the drawings. The present invention is not limited to the exemplary embodiments.

First embodiment.

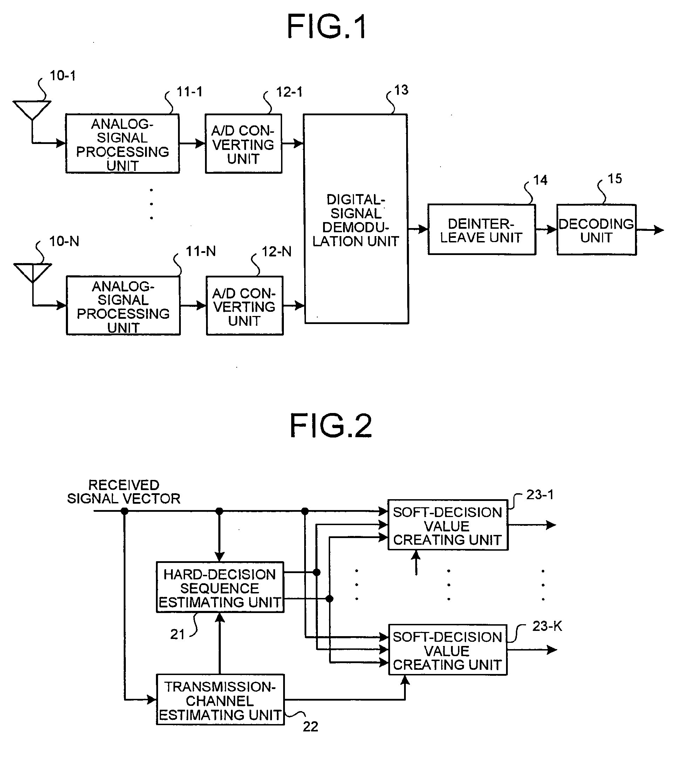

Fig. 1 is a diagram that depicts a configuration example of a first embodiment of a receiving apparatus (hereinafter referred to as a receiver) according to the present invention. The receiver according to the first embodiment includes antennas 10-1 to 10-N, analog-signal processing units 11-1 to 11-N, A/D converting units 12-1 to 12-N, a digital-signal demodulation unit 13, a deinterleave unit 14, and a decoding unit 15. The digital-signal demodulation unit 13 performs a characteristic operation according to the present invention. Operations of the receiver according to the present invention are explained below.

The analog-signal processing units 11-1 to 11-N perform analog signal processing, such as down-conversion, on high-frequency analog signals received via the antennas 10-1 to 10-N. Each signal output from the analog-signal processing units 11-1 to 11-N is then converted to a digital signal by the A/D converting units 12-1 to 12-N, and output to the digital-signal demodulation unit 13. The digital-signal demodulation unit 13 performs demodulation processing, which will be described below, on input signals, and obtains demodulation data. The deinterleave unit 14 performs processing inverse to interleave on the demodulation data, the interleave having been performed on a transmission signal by a transmitter, and then outputs the demodulation data. The decoding unit 15 performs error-correction decoding processing, i.e., soft decision decoding, on the signal output from the deinterleave unit 14, and outputs a result of the error-correction decoding processing as a decoded bit sequence.

Operations performed by the digital-signal demodulation unit 13 when demodulating an input signal (demodulation processing) are explained below. Fig. 2 is a diagram that depicts a configuration example of the digital-signal demodulation unit 13. The digital-signal demodulation unit 13 includes a hard-decision sequence estimating unit 21, a transmission-channel estimating unit 22, and soft-decision value creating units 23-1 to 23-K. K is equal to a bit count to be transmitted per symbol timing, and it depends on a demodulation method for the received signal and the quantity of signals that the transmitter transmits simultaneously from a plurality of antennas.

Baseband digital signals of N routes output from the A/D converting units 12-1 to 12-N are input into the digital-signal demodulation unit 13. For convenience of explanation, these input signals are hereinafter expressed as a N-dimensional column vector, and referred to as "a received signal vector". As the digital-signal demodulation unit 13 receives a received signal vector from the A/D converting units 12-1 to 12-N, at first, the transmission-channel estimating unit 22 estimates a transmission channel response of a desired signal based on the received signal vector. The estimation of the transmission channel response is performed by using, for example, least squares method using an orthogonalized known sequence between transmission antennas. Suppose that the transmitter transmits a plurality of different signals simultaneously by using the same frequency from M antennas (where M is an integer more than zero), a transmission channel response can be expressed as a matrix with N rows and M columns based on M antennas of the transmitter and N antennas of the receiver. Sometimes the transmission channel response is not a matrix but a vector or simply a scalar depending on the values of M and N; however, description of a transmission channel response is hereinafter uniformly referred to as "a transmission-channel response matrix". The present invention can be freely applied irrespective of whether the transmission-channel response matrix is a vector or a scalar.

The hard-decision sequence estimating unit 21 estimates a hard decision sequence corresponding to a transmission signal from a counter transmitter based on the received signal vector, which is the input signal, and a transmission-channel response matrix received from the transmission-channel estimating unit 22. Then, the hard-decision sequence estimating unit 21 outputs the estimated hard decision sequence, and likelihood information $\alpha$ corresponding to the hard decision sequence, to the soft-decision value creating units 23-1 to 23-K. The hard-decision sequence estimating unit 21 performs such estimation processing by using an arbitrary signal determination technology appropriate to the assumed communication system, such as reduced-complexity maximum likelihood detection, for example, "sphere decoding".

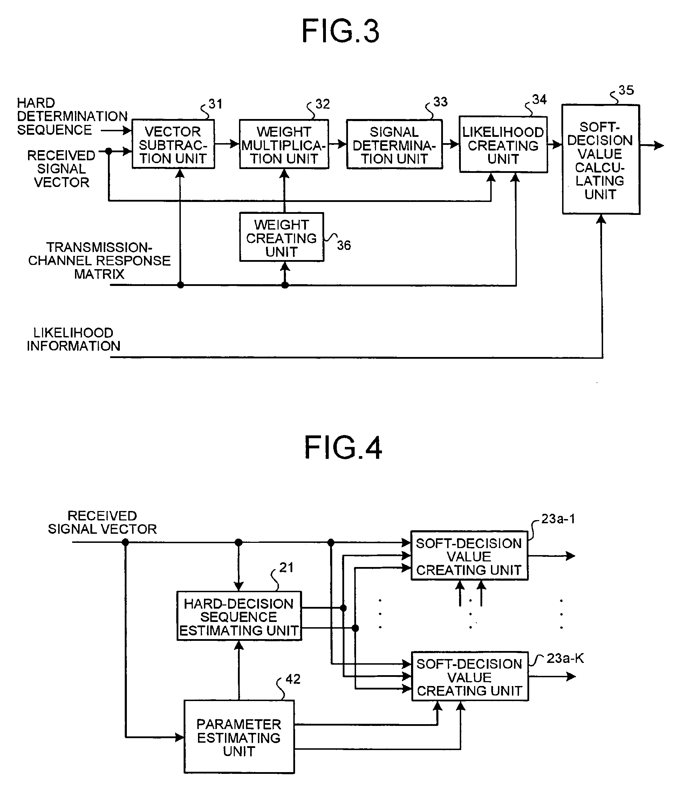

The soft-decision value creating units 23-1 to 23-K create soft decision values of the hard decision sequence by performing processing, which is described later based on the received signal vector, the transmission-channel response matrix, the hard decision sequence, and the likelihood information $\alpha$. Fig. 3 is a diagram that depicts a configuration example of an arbitrary one of the soft-decision value creating units 23-1 to 23-K. Each of the soft-decision value creating units 23-1 to 23-K includes a vector subtraction unit 31, a weight multiplication unit 32, a signal determination unit 33, a likelihood creating unit 34, a soft-decision value calculating unit 35, and a weight creating unit 36. Each of the soft-decision value creating units 23-1 to 23-K creates a soft decision value of each element (bit) in the hard decision sequence of K bits. An arbitrary soft-decision value creating unit 23-k (where k is an arbitrary integer between 1 and K) creates a soft decision value corresponding to k-th bit in the hard decision sequence. For convenience of explanation, hereinafter, a symbol number of a symbol that contains a subject bit of the soft-decision value calculation, i.e., the k-th bit in the hard decision sequence, is expressed as i (where i is an arbitrary integer between 1 and M), and an element number of a received signal vector corresponding to a receiving antenna number is expressed as j (where j is an arbitrary integer between 1 and N).

An example of operations performed by the soft-decision value creating units 23-1 to 23-K when creating a soft decision value is explained below in detail with reference to Fig. 3. The transmission-channel response matrix output from the transmission-channel estimating unit 22 is input into the vector subtraction unit 31, the weight creating unit 36, and the likelihood creating unit 34. The hard decision sequence output from the hard-decision sequence estimating unit 21 is input into the vector subtraction unit 31, and the received signal vector is input into the vector subtraction unit 31 and the likelihood creating unit 34.

The vector subtraction unit 31 multiplies the i-th column vector among the column vectors included in the transmission-channel response matrix by a symbol having an inverse bit to the k-th bit in the hard decision sequence, and subtracts a created vector (replica) as a result of the multiplication from the received signal vector, and outputs a result of the subtraction to the weight multiplication unit 32. This subtraction processing can be expressed with Equation (1):

$$r_j' = r_j - h_{ij}s_i' \qquad\qquad (1)$$

Where $r_j$ represents the j-th element in the received signal vector, $h_{ij}$ represents an element at the i-th row and the j-th column in the transmission-channel response matrix, and $s_i'$ represents the symbol having the inverse bit to k-th bit in the hard decision sequence. By executing Equation (1) for all j, the received signal vector can be converted into a form that takes into account an influence of inversing a subject bit of the soft-decision value calculation in the hard decision sequence. The available number of $s_i'$ basically depends on the modulation method; however, generally $s_i'$ equal to "(signal points per symbol)/2" are available. For this reason, the similar processing is performed on all combinations (available $s_i'$) corresponding to the modulation method being used (details will be described later). For example, there are two combinations according to the QPSK modulation, and there are eight combinations according to the 16QAM modulation.

The weight creating unit 36 deletes the i-th column vector from the transmission-channel response matrix as an input signal, and reconstructs a matrix with reduced size, i.e., N rows and (M-1) columns. The weight creating unit 36 then creates a weight matrix by calculating an inverse matrix of the reconstructed matrix, and outputs the weight matrix to the weight multiplication unit 32. If the reconstructed matrix is not a square matrix, precisely, if the relation N=M-1 is not established, a weight matrix is created by calculating a general inverse matrix of Moor-Penrose, which is widely known in mathematics. The size of the reconstructed matrix is N rows and (M-1) columns, so that the weight matrix is a matrix with (M-1) rows and N columns.

The weight multiplication unit 32 multiplies the vector received from the vector subtraction unit 31 by the weight matrix received from the weight creating unit 36, and outputs the result of the multiplication to the signal determination unit 33. An output signal output from the vector subtraction unit 31 is an n-dimensional vector, and the weighted vector is a matrix with (M-1) rows and N columns, so that the processing result obtained by the weight multiplication unit 32 is an (M-1) dimensional column vector. Each element of that vector is an estimated value of a symbol other than the i-th symbol when the i-th symbol from among the transmission signal is assumed as $s_i'$.

The signal determination unit 33 performs signal determination on each of (M-1) elements of the processing result obtained by the weight multiplication unit 32 based on transmission signal mapping (signal constellation), and outputs a combination of $s_i'$ and a signal determination result (a determination result for an estimated value of a symbol other than the i-th symbol) to the likelihood creating unit 34 as an estimated value of a sequence that the k-th bit in the hard decision sequence is inversed.

The likelihood creating unit 34 creates likelihood information β corresponding to the signal received from the signal determination unit 33 (the estimated value of the sequence that the k-th bit in the hard decision sequence is inversed), and outputs the created information to the soft-decision value calculating unit 35. Specifically, at first, the likelihood creating unit 34 multiplies the transmission-channel response matrix by the signal received from the signal determination unit 33 thereby creating a replica. Then, the likelihood creating unit 34 calculates the likelihood information β based on the created replica and the received signal vector, and outputs the calculated likelihood information β to the soft-decision value calculating unit 35.

As described in the operation explanation of the vector subtraction unit 31, a plurality of $s_i'$ exist. Therefore, the vector subtraction unit 31, the weight multiplication unit 32, the signal determination unit 33, and the likelihood creating unit 34 perform the above processing on all $s_i'$, and the likelihood creating unit 34 outputs results of the processing (plural pieces of the likelihood information β) to the soft-decision value calculating unit 35.

The soft-decision value calculating unit 35 calculates a soft decision value based on the likelihood information α received from the hard-decision sequence estimating unit 21, and the plural pieces of the likelihood information β received from the likelihood creating unit 34, and outputs the calculated soft decision value as demodulation data to the deinterleave unit 14. The soft-decision value calculating unit 35 stores therein the likelihood information β as many as combinations of available $s_i'$, and calculates a soft decision value by using (selecting) likelihood information β with the highest likelihood from among the plural pieces of the likelihood information β. A soft decision value is expressed as a ratio of likelihood information of a subject bit for calculating the soft decision value is "-1" to likelihood information of which a subject bit for calculating the soft decision value is "+1". When using metric between the received signal vector and the replica vector obtained by square error as likelihood information, a soft decision value of the k-th bit can be easily calculated by calculating a difference between metric corresponding to "-1" and metric corresponding to "+1" as shown in following Equation (2):

$$\text{(soft decision value of the k-th bit)}$$
$$= \text{(metric corresponding to "-1")} - \text{(metric corresponding to "+1")} \qquad (2)$$

For example, when the k-th bit in the hard decision sequence is "+1", a result of subtracting the likelihood information β (which has the highest likelihood in the outputs from the likelihood creating unit 34, i.e., the smallest metric between the received signal vector and the replica vector obtained by square error) from the likelihood information α in accordance with Equation (2) is a soft decision value.

The receiver in the first embodiment is assumed to include K units of the soft-decision value creating units. However, it is not necessary that the receiver includes a plurality of the soft-decision value creating units. In other words, the receiver can include a single soft-decision value creating unit that calculates soft decision values corresponding to all received signal vectors. Moreover, the likelihood creating unit 34 can be configured to include a means for storing therein information (for example, a memory). The likelihood creating unit 34 stores replica vectors in the memory in advance, instead of calculating a replica vector one by one created from the transmission-channel response matrix and transmission signal candidates. When receiving a signal from the signal determination unit 33, the likelihood creating unit 34 can calculate likelihood information about the received signal (likelihood information β) by referring to the stored replica vectors. The weight creating unit 36 is explained to be present in each of the soft-decision value creating units 23-1 to 23-K. However, one weight creating unit 36 can be provided as an external unit to the soft-decision value creating units 23-1 to 23-K, in which case the weight creating unit is configured to calculate a weight matrix corresponding to each symbol in an output signal from the transmission-channel estimating unit 22.

In this way, a configuration is adopted in the first embodiment in which estimation of likelihood information about an inverse bit to each element (bit) in the hard decision sequence (corresponding to the likelihood information β) is performed by using an inverse matrix of the transmission-channel response matrix that is reconstructed by reducing the dimension in the column direction. In addition, determination of a symbol having an inverse bit to a specific bit in the hard decision sequence (a subject bit of the soft-decision value calculation) is performed by taking into account the transmission-channel response matrix. Accordingly, a highly precise soft decision value can be created through a simple process, and satisfactory communication environment can be provided with a small circuit size. Moreover, a workload required for calculating soft decision values can be easily estimated based on an assumed system configuration.

Second embodiment.

A second embodiment is explained below. A configuration of a receiver according to the second embodiment is similar to that of the first embodiment. Fig. 4 is a diagram that depicts a configuration example of a digital-signal demodulation unit of the receiver according to the second embodiment. The digital-signal demodulation unit includes a parameter estimating unit 42 and soft-decision value creating units 23a-1 to 23a-K instead of the transmission-channel estimating unit 22 and the soft-decision value creating units 23-1 to 23-K, respectively, included in the digital-signal demodulation unit according to the first embodiment. The other units are similar to those according to the first embodiment, and assigned with the same reference numerals, so that explanations of them are omitted.

Similarly to the transmission-channel estimating unit 22 according to the first embodiment, the parameter estimating unit 42 estimates a transmission channel response (a transmission-channel response matrix) of a desired signal based on the received signal vector, and outputs a result of the estimation to the hard-decision sequence estimating unit 21 and the soft-decision value creating units 23a-1 to 23a-K. Furthermore, the parameter estimating unit 42 estimates information about a noise power, such as an average noise power applied on the received signal vector, or a average signal-to interference noise power ratio (hereinafter referred to as noise power information), and outputs a result of the estimation to the soft-decision value creating units 23a-1 to 23a-K. The estimation of the noise power information can be achieved by transmitting a known sequence between the transmitter and the receiver, and by averaging the power of signals from which a known sequence replica is removed across a received known sequence range.

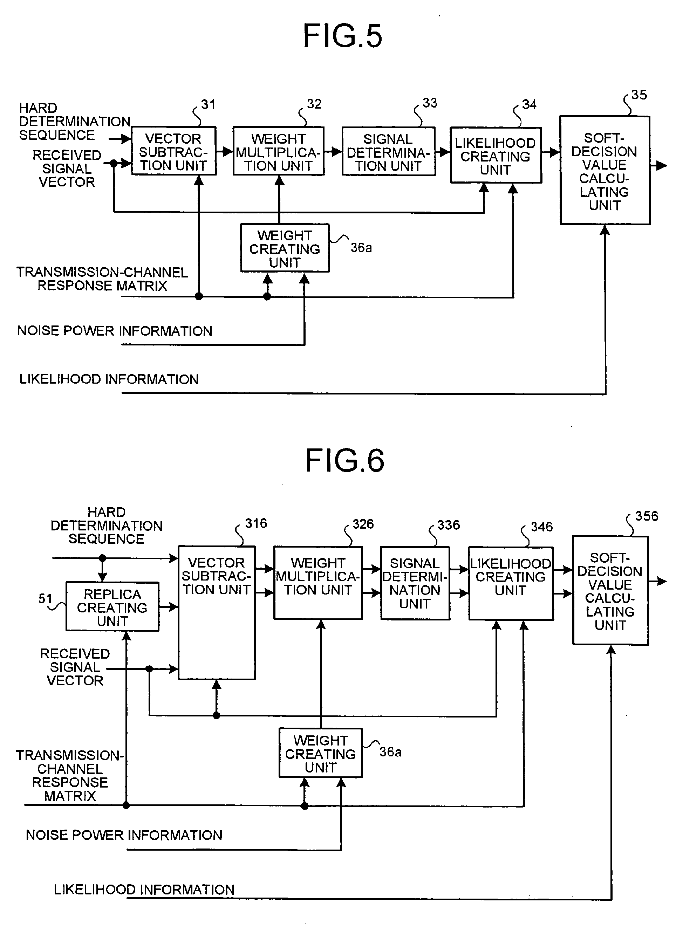

Each of the soft-decision value creating units 23a-1 to 23a-K creates a soft decision value based on the received signal vector, the transmission-channel response matrix, the hard decision sequence, the likelihood information $\alpha$ corresponding to the hard decision sequence, and the noise power information. Fig. 5 is a diagram that depicts a configuration example of an arbitrary one of the soft-decision value creating units 23a-1 to 23a-K included in the digital-signal demodulation unit of the receiver according to the second embodiment. Each of the soft-decision value creating units 23a-1 to 23a-K includes a weight creating unit 36a instead of the weight creating unit 36 of the soft-decision value creating units 23-1 to 23-K according to the first embodiment. The other units are similar to those according to the first embodiment. Operations of the weight creating unit 36a are explained below.

To begin with, the weight creating unit 36a deletes the i-th column vector from the transmission-channel response matrix that is one of input signals, and reconstructs a matrix with a reduced column, i.e., a matrix with N rows and (M-1) columns. The weight creating unit 36a then creates a weight matrix by using the reconstructed matrix and following Equation (3), and outputs a result of the creation to the weight multiplication unit 32:

$$w=[(H'^{*}H'^{T}+M\sigma^{2}I)^{-1}H'^{*}]^{T} \qquad (3)$$

Where w represents a weight matrix, H' represents a reconstructed transmission-channel response matrix, M represents the number of signals simultaneously transmitted by the transmitter, I represents an identity matrix, $1/\sigma^2$ represents an average-signal to interference-noise-power ratio, the mark * represents a complex conjugate, and T represents inversion of the matrix.

As described above, a configuration is adopted in the second embodiment in which likelihood information about an inverse bit of each element (bit) in the hard decision sequence is estimated by using a weight matrix created by taking an average noise power into account. In addition, the weight matrix is calculated only through matrix calculation using the transmission-channel response matrix reconstructed by reducing the dimension in the column direction. Accordingly, a more precise soft decision value can be calculated, and a workload required for the soft decision calculation can be easily estimated based on an assumed system configuration. Furthermore, satisfactory communication environment can be provided with a very small circuit size.

Third embodiment.

A third embodiment is explained below. A configuration of a receiver and a configuration of a digital-signal demodulation unit included in the receiver according to the third embodiment are similar to the second embodiment. In the third embodiment, a configuration of each of soft-decision value creating units included in the digital-signal demodulation unit is different from that in the second embodiment. Operations of each of the soft-decision value creating units are explained below.

Fig. 6 is a diagram that depicts a configuration example of an arbitrary soft-decision value creating unit included in the digital-signal demodulation unit of the receiver according to the third embodiment. Each of the soft-decision value creating units has a configuration that includes a vector calculation unit 31b, a weight multiplication unit 32b, a signal determination unit 33b, a likelihood creating unit 34b, and a soft-decision value calculating unit 35b instead of the vector calculation unit 31, the weight multiplication unit 32, the signal determination unit 33, the likelihood creating unit 34, and the soft-decision value calculating unit 35, respectively, included in the soft-decision value creating units according to the second embodiment. Furthermore, a replica creating unit 51 is newly added. The weight creating unit 36a performs the operations similarly to the weight creating unit according to the second embodiment.

An operational example of the soft-decision value creating unit is explained below in detail with reference to Fig. 6. To begin with, the replica creating unit 51 creates a replica vector of the hard decision sequence by multiplying the hard decision sequence by the transmission-channel response matrix, and outputs a result of the multiplication to the vector subtraction unit 31b.

The vector subtraction unit 31b multiplies the i-th column vector among the column vectors included in the transmission-channel response matrix by a symbol having an inverse bit to the k-th bit in the hard decision sequence, and subtracts the created vector as a result of the multiplication from both the received signal vector and the replica vector. Furthermore, the vector subtraction unit 31b outputs a result obtained from the subtraction processing to the weight multiplication unit 32b.

The weight multiplication unit 32b multiplies vector signals of two routes received from the vector subtraction unit 31b by respective weight matrices received from the weight creating unit 36a, and outputs results of the multiplications to the signal determination unit 33b.

The signal determination unit 33b performs signal determination on each of the received signals of the two routes based on the transmission signal mapping, and outputs a result of the signal determination to the likelihood creating unit 34b. The likelihood creating unit 34b performs the processing similar to that performed by the likelihood creating unit 34 according to the first embodiment on each of the signals of the two routes received from the signal determination unit 33b by using the received signal vector and the transmission-channel response matrix, creates likelihood information $\beta$ about each of the signals of the two routes, and outputs the created likelihood information $\beta$ to the soft-decision value calculating unit 35b.

Similarly to the first embodiment, according to the third embodiment, because there is a plurality of $s_i'$ for the vector subtraction unit 31b to take into account, the vector subtraction unit 31b, the weight multiplication unit 32b, the signal determination unit 33b, and the likelihood creating unit 34b, all perform the processing described above on all $s_i'$.

The soft-decision value calculating unit 35b calculates a soft decision value based on the likelihood information $\alpha$ received corresponding to the hard decision sequence and the likelihood information $\beta$ received from the likelihood creating unit 34b. The likelihood information $\beta$ input from the likelihood creating unit 34b is the likelihood information $\beta$ obtained as a result of performing a certain signal processing (corresponding to the processing performed by the vector subtraction unit 31b, the weight multiplication unit 32b, the signal determination unit 33b, and the likelihood creating unit 34b) on a received signal vector, and the likelihood information $\beta$ obtained as a result of performing a certain signal processing on a replica vector output from the replica creating unit 51. For this reason, the soft-decision value calculating unit 35b calculates a soft decision value by using (selecting) likelihood information $\beta$ with the highest likelihood from among a plurality of pieces of the likelihood information $\beta$, and performing the processing similar to that performed by the soft-decision value calculating unit 35 according to the first embodiment.

The soft-decision value creating unit according to the third embodiment is configured to include a set of signal processing units (corresponding to the units from the vector subtraction unit 31b to the likelihood creating unit 34b) that perform a certain processing on both a received signal vector and a replica vector output from the replica creating unit 51; however, the third embodiment is not limited to this. In other words, the soft-decision value creating unit can be configured to include a signal processing unit for processing a received signal vector and a signal processing unit for processing a replica vector independently (to include two sets of signal processing units).

Alternatively, the receiver can be configured to include a single unit of the replica creating unit 51 shown in Fig. 6 externally (and upstream) to the soft-decision value creating units, and the replica creating unit 51 can be configured to output a replica vector to each of the soft-decision value creating units.

When the hard-decision sequence estimating unit performs the reduced-complexity maximum likelihood detection, such as sphere decoding, the hard-decision sequence estimating unit has already calculated a replica vector of the hard decision sequence in a signal estimation process (process of estimating the hard decision sequence). Therefore, the receiver can be configured such that the hard-decision sequence estimating unit outputs the replica vector calculated in the signal estimation process, and the soft-decision value creating units perform the processing described above by using the replica vector. Accordingly, similar effect can be obtained even by not providing the replica creating unit 51.

Moreover, the receiver can be configured such that if it is determined that noise power is small, which can be determined based on noise power information input in the weight creating unit 36a, the soft-decision value creating units perform only soft-decision value creating processing on replica vectors created by the replica creating unit 51, and do not perform soft-decision value creating processing on received signal vectors. Accordingly, an average workload can be reduced.

A series of processing performed by the units from the vector subtraction unit 31b to the likelihood creating unit 34b is not limited to processing to be performed on signal vectors of the two routes, namely, received signal vectors and replica vectors created from the hard decision sequence and the transmission-channel response matrix. Signal vectors of three or more routes can be input, and the units from the vector subtraction unit 31b to the likelihood creating unit 34b are configured to calculate likelihood information about the inputs.

In this way, according to the third embodiment, it is configured to perform signal processing for the soft-decision value calculation on the received signal vector and the replica vector created from the hard decision sequence and the transmission-channel response matrix, and to create likelihood information by taking into account each result of the signal processing. Accordingly, a more precise soft decision value can be obtained while keeping a low workload.

Fourth embodiment.

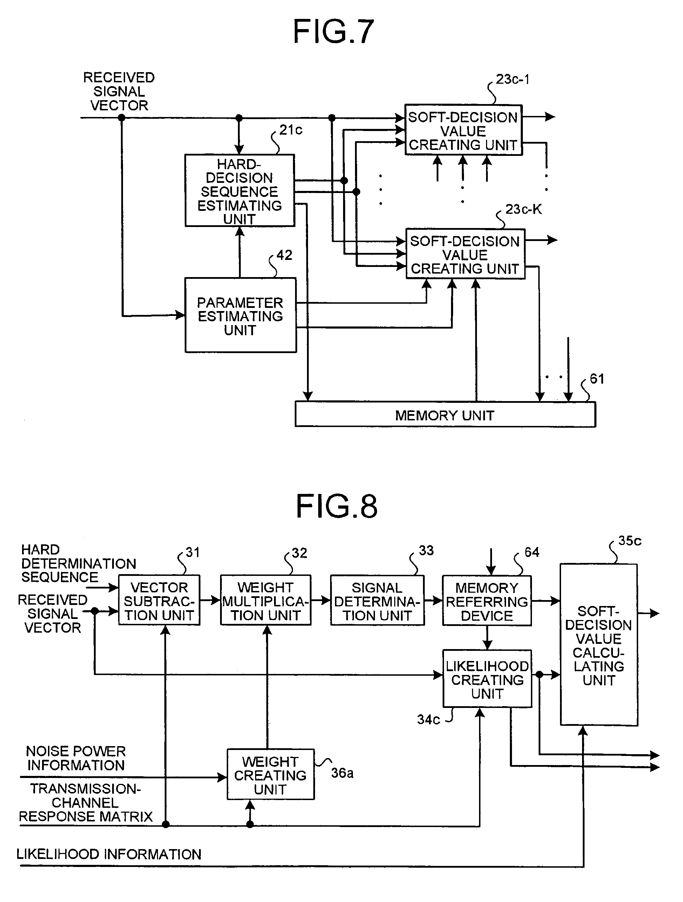

A fourth embodiment is explained below. A configuration of a receiver according to the fourth embodiment is similar to that of the second embodiment. Fig. 7 is a diagram that depicts a configuration example of a digital-signal demodulation unit according to the fourth embodiment. The digital-signal demodulation unit includes a hard-decision sequence estimating unit 21c and soft-decision value creating units 23c-1 to 23c-K instead of the hard-decision sequence estimating unit 21 and the soft-decision value creating units 23a-1 to 23a-K included in the receiver according to the second embodiment, and furthermore, a memory unit 61 is newly added. The other units are similar to those according to the second embodiment, and assigned with the same reference numerals, so that explanations of them are omitted. In the fourth embodiment, output from the hard-decision sequence estimating unit 21c are stored in the memory unit 61, and the soft-decision value creating units 23c-1 to 23c-K perform processing by referring to information stored in the memory unit 61.

Similarly to the hard-decision sequence estimating unit 21 according to the first embodiment, the hard-decision sequence estimating unit 21c estimates a hard decision sequence based on a received signal vector and a transmission-channel response matrix, and outputs a result of the estimation and likelihood information $\alpha$ corresponding to the result, to the soft-decision value creating units 23c-1 to 23c-K. Generally, in the reduced-complexity maximum likelihood detection, there is a tendency to calculate likelihood information about some other transmission symbol candidates in addition to likelihood information about a transmission symbol to be finally output, during a process until calculating the maximum likelihood symbol. For this reason, the hard-decision sequence estimating unit 21c outputs to the memory unit 61 a combination of a hard decision sequence to be finally output and likelihood information $\alpha$, and combinations of all pieces of likelihood information calculated in the process and respective transmission symbol candidates. The memory unit 61 stores therein the information received from the hard-decision sequence estimating unit 21c. Moreover, the memory unit 61 stores therein a plurality of pieces of likelihood information $\beta$ created by a likelihood creating unit 34c, which will be described later, and information about signals corresponding to the likelihood information $\beta$.

An operational example of the soft-decision value creating units 23c-1 to 23c-K is explained below in detail with reference to Fig. 8. Fig. 8 is a diagram that depicts a configuration example of an arbitrary one of the soft-decision value creating units 23c-1 to 23c-K. Each of the soft-decision value creating units 23c-1 to 23c-K includes the likelihood creating unit 34c and a soft-decision value calculating unit 35c instead of the likelihood creating unit 34 and the soft-decision value calculating unit 35, respectively, included in the soft-decision value creating units 23a-1 to 23a-K according to the second embodiment, and furthermore, a memory referring device 64 is newly added. The other units are similar to those according to the second embodiment, and assigned with the same reference numerals, so that explanations of them are omitted. The signal determination unit 33 outputs a processing result (a result of signal determination) to the memory referring device 64.

Upon receiving the signal (the result of the signal determination) from the signal determination unit 33, the memory referring device 64 refers to transmission symbol candidates stored in the memory unit 61. If the same transmission symbol candidate as the signal received from the signal determination unit 33 is stored in the memory unit 61, the memory referring device 64 reads likelihood information $\beta$ corresponding to the transmission symbol candidate from the memory unit 61, and outputs the read likelihood information $\beta$ to the soft-decision value calculating unit 35c. By contrast, if the same transmission symbol candidate as the signal received from the signal determination unit 33 is not stored in the memory unit 61, the memory referring device 64 outputs the signal received from the signal determination unit 33 to the likelihood creating unit 34c. When receiving the signal from the memory referring device 64, the likelihood creating unit 34c calculates likelihood information $\beta$ by performing the processing similar to that performed by the likelihood creating unit 34 according to the second embodiment, and outputs a result of the calculation to the soft-decision value calculating unit 35c. Moreover, the likelihood creating unit 34c outputs to the memory unit 61 the calculated likelihood information $\beta$, and the signal that is used when calculating the likelihood information $\beta$ (the signal received from the signal determination unit 33 via the memory referring device 64). When receiving the likelihood information $\beta$ from the memory referring device 64 or the likelihood creating unit 34c, the soft-decision value calculating unit 35c calculates a soft decision value based on the likelihood information $\beta$ by performing the processing similar to that performed by the soft-decision value calculating unit 35 according to the first embodiment.

The receiver according to the fourth embodiment is configured that the digital-signal demodulation unit and each of the soft-decision value creating units included in the receiver according to the second embodiment are added with the memory unit 61 and the memory referring device 64, respectively. However, the fourth embodiment is not limited to this. It can also be configured that the digital-signal demodulation unit and each of the soft-decision value creating units included in the receiver according to the first or third embodiment are added with the memory unit 61 and the memory referring device 64, respectively.

Alternatively, the memory referring device 64 can be arranged upstream to the vector subtraction unit 31 in Fig. 8, to refer to the memory unit 61 in advance, and to output likelihood information to the soft-decision value calculating unit 35c, if the likelihood information corresponding to a symbol containing an inverse bit of a subject bit of the soft-decision value calculation in the hard decision sequence is stored in the memory unit 61. In such case, intermediate processing required for likelihood information calculation is not needed, so that the complexity can be further reduced. Instead of providing the memory unit 61, the hard-decision sequence estimating unit and the soft-decision value creating units can be configured to exchange directly likelihood information and symbol information.

In this way, a configuration is adopted in the fourth embodiment in which a hard decision sequence obtained as a result of hard-decision sequence estimation-processing and likelihood information $\alpha$ corresponding to the hard decision sequence, candidates of the hard decision sequence calculated during the process of the hard-decision sequence estimation-processing and likelihood information corresponding to the candidates, and likelihood information $\beta$ and information about a signal used for calculating the likelihood information $\beta$ are stored in advance in a memory. The digital-signal demodulation unit 13 is configured to operate by referring to those information, and omits calculation of likelihood information about a symbol about which likelihood has been already calculated. Accordingly, the complexity can be reduced without loss of precision of a processing result.

Fifth embodiment.

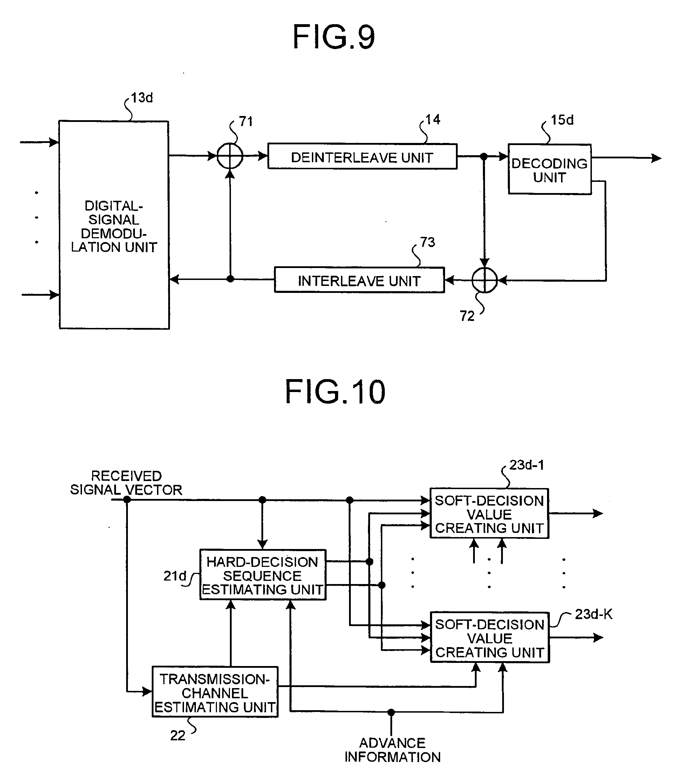

A fifth embodiment is explained below. Fig. 9 is a diagram that depicts a configuration example of a receiver according to the fifth embodiment. The receiver according to the fifth embodiment includes a digital-signal demodulation unit 13d and a decoding unit 15d instead of the digital-signal demodulation unit 13 and the decoding unit 15, respectively, included in the receiver according to the first embodiment, and furthermore, an interleave unit 73 and adders 71 and 72 are newly added. The units corresponding to the antennas 10-1 to 10-N, the analog-signal processing units 11-1 to 11-N, the A/D converting units 12-1 to 12-N shown in Fig. 1 are also provided but they are not shown in Fig. 9.

In the fifth embodiment, the deinterleave unit 14, the decoding unit 15d, the interleave unit 73, the adders 71 and 72 operate as signal decoding units. The decoding unit 15d is a so-called soft-input soft-output decoder. In the receiver according to the fifth embodiment, advance information is created based on decoded data output by the decoding unit 15d; the digital-signal demodulation unit 13d performs signal demodulation operation by taking the obtained advance information into account; and after the advance information and soft decision values are further interchanged a predetermined number of times between the signal decoding units and the digital-signal demodulation unit 13d, the decoded data obtained by the decoding unit 15d is treated as the final decoded data of which determination precision is improved.

Fig. 10 is a diagram that depicts a configuration example of the digital-signal demodulation unit 13d included in the receiver according to the fifth embodiment. The digital-signal demodulation unit 13d includes hard-decision sequence estimating unit 21d and soft-decision value creating units 23d-1 to 23d-K instead of the hard-decision sequence estimating unit 21 and the soft-decision value creating units 23-1 to 23-K, respectively, included in the digital-signal demodulation unit 13 according to the first embodiment. The other units are similar to those according to the first embodiment, and assigned with the same reference numerals, so that explanations of them are omitted.

The hard-decision sequence estimating unit 21d outputs a hard decision sequence that is most likely and likelihood information $\alpha$ corresponding to the hard decision sequence, based on the received signal vector, the transmission-channel response matrix, and advance information that is output from the interleave unit 73, which will be described later. The hard-decision sequence estimating unit 21d creates likelihood information by using a method, for example, the sphere decoding, which performs MAP (Maximum A posteriori Probability) estimation, which is known as a likelihood-information creating method by taking advance information into account. The hard-decision sequence estimating unit 21d outputs the estimated hard decision sequence and likelihood information $\alpha$ to the soft-decision value creating units 23-1 to 23-K.

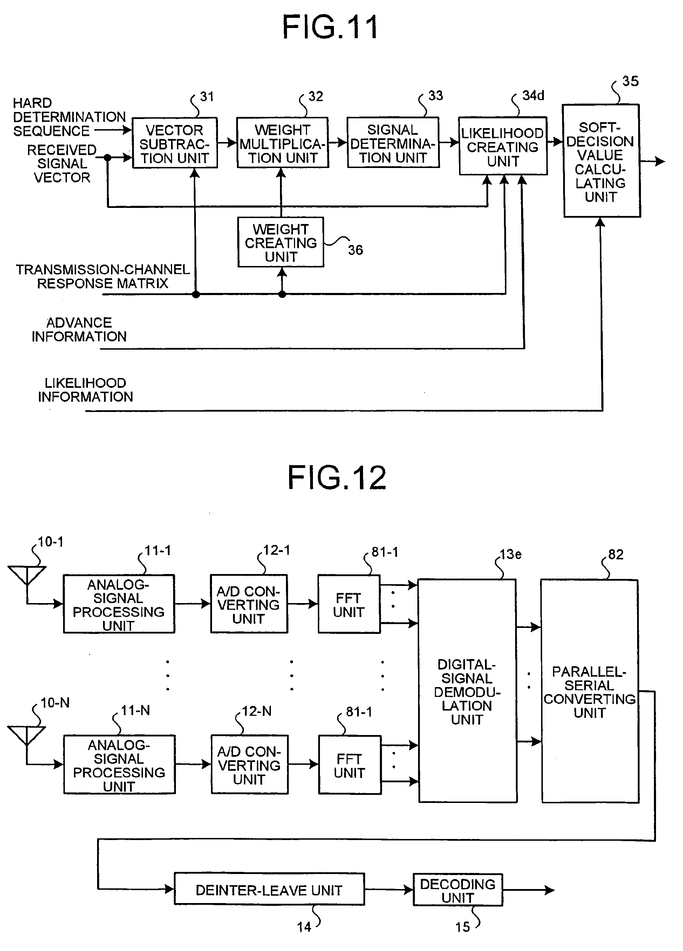

An operational example of the soft-decision value creating units 23d-1 to 23d-K is explained below in detail with reference to Fig. 11. Fig. 11 is a diagram that depicts a configuration example of an arbitrary one of the soft-decision value creating units 23d-1 to 23d-K. Each of the soft-decision value creating units 23d-1 to 23d-K includes a likelihood creating unit 34d instead of the likelihood creating unit 34 included in each of the soft-decision value creating units 23-1 to 23-K according to the first embodiment. The other units are similar to those according to the first embodiment, and assigned with the same reference numerals, so that explanations of them are omitted.

The likelihood creating unit 34d calculates likelihood information $\beta$ based on a signal received from the signal determination unit 33, the received signal vector, the transmission-channel response matrix, and the advance information received from the interleave unit 73, and outputs a result of the calculation to the soft-decision value calculating unit 35. In the same manner as the hard-decision sequence estimating unit 21d, the likelihood creating unit 34d performs likelihood-information creating processing by using a method, for example, the sphere decoding, which performs MAP estimation. In other words, similarly to the first embodiment, the likelihood creating unit 34d creates a replica vector based on the transmission-channel response matrix and the signal received from the signal determination unit 33, and creates likelihood information based on the replica vector, the received signal vector, and the advance information.

The soft-decision value calculating unit 35 calculates a soft decision value by performing the processing similar to that performed by the first embodiment based on the likelihood information $\alpha$ received from the hard-decision sequence estimating unit 21d and the likelihood information $\beta$ received from the likelihood creating unit 34d.

The adder 71, upon receiving a soft decision value from the digital-signal demodulation unit 13d, subtracts from the received soft decision value the advance information as an output signal from the interleave unit 73, and outputs a result of the subtraction to the deinterleave unit 14. The deinterleave unit 14 performs processing inverse to interleave performed on the transmission signal by a transmitter, and outputs a result of the processing to the decoding unit 15d and the adder 72. The decoding unit 15d is achieved by a so-called soft-input soft-output decoder, for example, a SOVA (Soft Output Viterbi Algorithm) decoder, or a MAP decoder, and performs decoding processing on the signal received from the deinterleave unit 14. The adder 72 subtracts the signal received from the deinterleave unit 14 from an output signal from the decoding unit 15d, and outputs a result of the subtraction to the interleave unit 73. The interleave unit 73 performs the same processing as the interleave performed on the transmission signal by the transmitter, and outputs a result of the processing to the digital-signal demodulation unit 13d and the adder 71.

In the receiver according to the fifth embodiment, the creation processing of the soft decision values and the decoding processing are repeated while soft decision values and advance information are interchanged between the digital-signal demodulation unit 13d and the decoding unit 15d via the adder 71, the deinterleave unit 14, the adder 72, and the interleave unit 73. Consequently, data that is obtained by repeatedly performing the processing a predetermined number of times is treated as the final decoded data. Thus, determination precision is improved.

According to the fifth embodiment, a configuration has been adopted in which the interleave unit 73 is newly added to the receiver according to the first embodiment; however, the fifth embodiment is not limited to this. In other words, a configuration can be adopted in which the interleave unit 73 is newly added to the receiver according to the second, third, or fourth embodiment.

In this way, in the fifth embodiment, a configuration has been adopted in which demodulation and decoding processing is performed repeatedly by interchanging soft decision values and advance information between the digital-signal demodulation unit 13d and the decoding unit 15d. Accordingly, precision of determination data can be improved, and satisfactory communication can be achieved. Moreover, similarly to the other embodiments described above, a configuration has been adopted in which soft-decision value creating processing is performed by the digital-signal demodulation unit 13d through matrix calculation using a transmission-channel response matrix that is reconstructed by reducing the dimension in the column direction. Accordingly, the receiver according to the fifth embodiment that repeatedly performs modulation processing and decoding processing can be achieved with a small circuit size.

Sixth embodiment.

A sixth embodiment is explained below. Fig. 12 is a diagram that depicts a configuration example of a receiver according to the sixth embodiment. The receiver according to the sixth embodiment has a configuration that includes a digital-signal demodulation unit 13e instead of the digital-signal demodulation unit 13 included in the receiver according to the first embodiment, and furthermore, FFT (Fast Fourier Transform) units 81-1 to 81-N and a parallel-serial converting unit 82 are newly added. The other units are similar to those according to the first embodiment, and assigned with the same reference numerals, so that explanations of them are omitted.

A multi-carrier high-frequency analog signal received via N antennas 10-1 to 10-N (for example, OFDM (Orthogonal Frequency Division Multiplexing), or MC-CDMA (Multi Carrier-Code Division Multiple Access)) is input into the FFT units 81-1 to 81-N after a certain processing is performed by the analog-signal processing units 11-1 to 11-N. Each of the FFT units 81-1 to 81-N transforms a time-domain signal to a frequency-domain signal per sub-carrier by performing discrete Fourier transform or fast discrete Fourier transform on each input signal, and outputs a result of the transformation to the digital-signal demodulation unit 13e.

The digital-signal demodulation unit 13e has a configuration similar to that of the digital-signal demodulation unit included in the receiver according to one of the first to fifth embodiments, and it outputs a soft decision value as demodulation data by performing operation appropriate to the configuration. The digital-signal demodulation unit 13e according to the fifth embodiment performs processing of outputting a soft decision value for each sub-carrier, which is an input signal. The parallel-serial converting unit 82 rearranges demodulation data of each sub-carrier estimated by the digital-signal demodulation unit 13e to serial, and outputs a result of the rearrangement.

A configuration is adopted in the sixth embodiment in which the FFT units 81-1 to 81-N are newly added to the receiver according to the first embodiment, however, the sixth embodiment is not limited to this. In other words, the FFT units 81-1 to 81-N can also be added to the receiver according to any one of the second to fifth embodiments.

In this way, in the sixth embodiment, a received signal is demodulated per sub-carrier, and the processing to be performed by the digital-signal demodulation unit described above is applied to the receiver that receives a multi-carrier signal according to OFDM or MC-CDMA. Accordingly, even if employing OFDM or MC-CDMA, an effect similar to the first to fifth embodiments described above can be obtained.

Seventh embodiment.

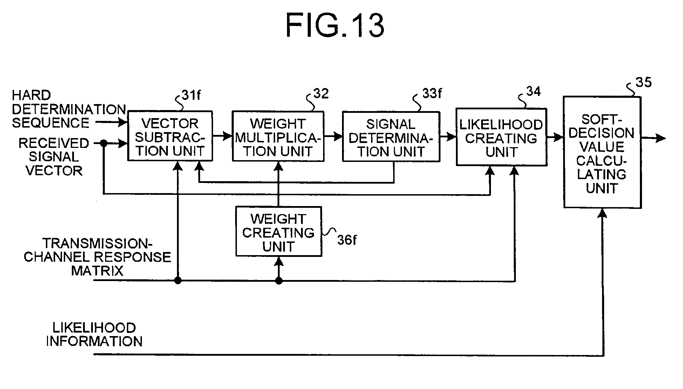

A seventh embodiment is explained below. A configuration of a receiver according to the seventh embodiment is similar to that of the first embodiment. Fig. 13 is a diagram that depicts a configuration example of a soft-decision value creating unit constituting a digital-signal demodulation unit included in the receiver according to the seventh embodiment. The soft-decision value creating unit includes a vector subtraction unit 31f, a signal determination unit 33f, and a weight creating unit 36f instead of the vector subtraction unit 31, the signal determination unit 33, and the weight creating unit 36 included in the receiver according to the first embodiment. Moreover, the signal determination unit 33f outputs a result of processing to the vector subtraction unit 31f.
The other units are similar to those according to the first embodiment, and assigned with the same reference numerals, so that explanations of them are omitted.

According to the seventh embodiment, when the soft-decision value creating unit estimates a sequence that a bit in the hard decision sequence is inversed, signal determination is sequentially performed by repeating weight multiplication and vector subtraction.

At first, in accordance with a procedure similar to that performed by the vector subtraction unit 31 according to the first embodiment, the vector subtraction unit 31f creates a replica based on the transmission-channel response matrix and a symbol corresponding to the hard decision sequence, and subtract the replica from the received signal vector. Then, a result of the vector subtraction is then output to the weight multiplication unit 32.

On the other hand, in the same manner as the weight creating unit 36 according to the first embodiment, the weight creating unit 36f deletes a column vector relevant to a symbol containing a subject bit of the soft-decision value calculation from the transmission-channel response matrix as an input signal, and reconstructs a transmission-channel response matrix. The weight creating unit 36f then creates a weight matrix by calculating an inverse matrix of the reconstructed transmission-channel response matrix, or a general inverse matrix of Moor-Penrose. The weight creating unit 36f calculates the norm (size) of each of row vectors constituting the weight matrix, and outputs a row vector which is the smallest norm as a weight.

The weight multiplication unit 32 then multiplies the signal received from the vector subtraction unit 31 by the weight received from the weight creating unit 36f, and outputs a result of the multiplication to the signal determination unit 33f. As described above, because the weight received from the weight creating unit 36f is a vector, the processing result is a complex scalar.

The signal determination unit 33f performs signal determination on a processing result obtained by the weight multiplication unit 32 based on the transmission signal mapping, stores therein a result of the signal determination, and outputs the result (give feedback) to the vector subtraction unit 31f.

Upon receiving the output signal from the signal determination unit 33f, as against the vector subtraction unit 31 according to the first embodiment, the vector subtraction unit 31f creates a replica by multiplying the signal from the signal determination unit 33f by a column vector relevant to the signal from the signal determination unit 33f from among column vectors constituting the transmission-channel response matrix. The vector subtraction unit 31f then subtracts the created replica from the received signal vector on which the vector subtraction is already performed in the previous step (a result of the previous vector subtraction).

The weight creating unit 36f further deletes a column vector relevant to a row vector output as the previous weight from the transmission-channel response matrix created (reconstructed) by reducing the dimension in the previous weight creating corresponding, and reconstructs and creates a new transmission-channel response matrix. The weight creating unit 36f then calculates an inverse matrix of the newly created transmission-channel response matrix, or a general inverse matrix of Moor-Penrose, and creates a new weight matrix. The weight creating unit 36f then outputs a row vector that has the smallest norm from among row vectors constituting the newly created weight matrix as a weight to the weight multiplication unit 32. The signal determination unit 33f, as described above, gives feedback of the signal determination processing and a result of the determination.

The vector subtraction unit 31f, the weight creating unit 36f, the weight multiplication unit 32, and the signal determination unit 33f repeatedly perform a series of processing as described above until the signal determination unit 33f finishes signal determination for all signal dimensions. The signal determination unit 33f then rearranges each of determination signals into the original signal order in accordance with an order in which the signals are detected (the order in which the weight creating unit 36f sequences the signals based on row norms of the weight matrix), and outputs the rearranged determination signals to the likelihood creating unit 34 as an estimated value when a subject bit of the soft-decision value calculation in the hard decision sequence is inversed. After that, the likelihood creating unit 34 and the soft-decision value calculating unit 35 perform the processing similar to the first embodiment, and create a soft decision value.

A configuration is adopted in the seventh embodiment in which the soft-decision value creating units use an inverse matrix of the transmission-channel response matrix reconstructed by reducing the dimension, or an general inverse matrix of Moor-Penrose as a weight calculation method; however, the seventh embodiment is not limited to this. In other words, the soft-decision value creating units can be configured to use in parallel information about noise power as explained in the second embodiment.

Moreover, although a configuration is adopted in which the weight creating unit 36 sequences based on the row norm of the weight matrix, it is possible to adopt a configuration in which weight is created and output in an order without depending on the row norm by omitting the sequencing.

In this way, in the seventh embodiment, likelihood information about a sequence having an inverse bit of the hard decision sequence is to be determined by repeating weight multiplication and replica subtraction. The order of performing signal determination is settled in accordance with the size of a row norm in the weight matrix. Accordingly, a more precise soft decision value can be calculated.

INDUSTRIAL APPLICABILITY

As described above, the receiver according to the present invention is useful as a communication device that can demodulate a modulated signal received via a plurality of antennas, and particularly suitable for a communication device that performs maximum likelihood detection as demodulation processing.

**Claims**

1. A receiving apparatus that demodulates a modulated signal received via a plurality of antennas, the receiving apparatus comprising:

   a transmission-channel estimating unit that estimates a transmission-channel response matrix in accordance with a quantity of antennas and a quantity of symbols based on a received signal vector, the received signal vector being a vector expression of a plurality of baseband digital signals obtained by performing certain receiving processing;
   a hard-decision sequence estimating unit that estimates a hard decision sequence based on the received signal vector and the transmission-channel response matrix, and outputs a hard decision sequence obtained as estimation result and first likelihood information corresponding to the hard decision sequence; and
   a soft-decision value creating unit that creates second likelihood information corresponding to a sequence that a specific bit in the hard decision sequence is inversed by using the received signal vector, a transmission-channel response matrix reconstructed by reducing a dimension of the transmission-channel response matrix, and the hard decision sequence, and creates a soft decision value of each bit in the hard decision sequence based on the second likelihood information and the first likelihood information.

2. The receiving apparatus according to claim 1, wherein the soft-decision value creating unit includes
   a vector subtraction unit that creates a replica of a symbol containing a subject bit as a target for soft decision value creation, based on the transmission-channel response matrix and a symbol having an inverse bit of a specific bit in the hard decision sequence, and subtracts the replica from the received signal vector;
   a weight creating unit that reconstructs the transmission-channel response matrix by reducing a dimension, and creates a weight matrix based on reconstructed transmission-channel response matrix;
   a weight multiplication unit that multiplies subtraction result obtained by the vector subtraction unit by the weight matrix;
   a signal determination unit that estimates a sequence that a bit in the hard decision sequence is inversed, from a multiplication result obtained by the weight multiplication unit based on transmission signal mapping;
   a likelihood creating unit that creates the second likelihood information based on the received signal vector, the transmission-channel response matrix, and a determination result obtained by the signal determination unit; and
   a soft-decision value calculating unit that calculates a soft decision value based on the first likelihood information and the second likelihood information.

3. The receiving apparatus according to claim 2, wherein the likelihood creating unit creates a replica by multiplying the transmission-channel response matrix by the determination result obtained by the signal determination unit, and creates the second likelihood information based on the replica and the received signal vector.

4. The receiving apparatus according to claim 2, wherein
   the transmission-channel estimating unit further estimates information about noise power applied on the received signal vector, and
the soft-decision value creating unit further uses the information about the noise power in creation of the soft decision value.

5. The receiving apparatus according to claim 4, wherein the weight creating unit creates a weight matrix based on the reconstructed transmission-channel response matrix and the information about the noise power.

6. The receiving apparatus according to claim 2, wherein
the soft-decision value creating unit further includes a replica creating unit that creates a replica of the hard decision sequence based on the transmission-channel response matrix,
the vector subtraction unit, the weight multiplication unit, the signal determination unit, and the likelihood creating unit, perform a series of processing on replica created by the replica creating unit, and create third likelihood information,
the soft-decision value calculating unit selects one of the second likelihood information and the third likelihood information, and creates a soft decision value based on selected likelihood information and the first likelihood information.

7. The receiving apparatus according to claim 2, wherein
the hard-decision sequence estimating unit stores therein, in addition to performing a process of outputting the hard decision sequence and the first likelihood information corresponding to the hard decision sequence, likelihood information corresponding to a transmission symbol candidate calculated in the process of the processing, and when stored likelihood information corresponding to a transmission symbol candidate having an inverse bit of a specific bit in the hard decision sequence is present, the likelihood creating unit further outputs the stored likelihood information as the second likelihood information.

8. The receiving apparatus according to claim 2, further comprising a signal decoding unit that decodes a soft decision value received from the soft-decision value creating unit repeatedly a certain number of times, wherein
the signal decoding unit creates a certain advance information to be used for repeated decoding, and outputs the advance information to the hard-decision sequence estimating unit and the soft-decision value creating unit,
the hard-decision sequence estimating unit refers also to the advance information, and performs estimation processing of the hard decision sequence, and creation processing the first likelihood information corresponding to the hard decision sequence, and
the soft-decision value creating unit refers also to the advance information, and performs processing that can be performed by the likelihood creating unit and processing that can be performed by the soft-decision value calculating unit.

9. A receiving apparatus configured to be used in a system that employs one of OFDM (Orthogonal Frequency Division Multiplexing) and MC-CDMA (Multi Carrier-Code Division Multiple Access), and to demodulate a multi-carrier modulated signal received via a plurality of antennas, the receiving apparatus comprising:

a signal converting unit that converts a time-domain signal as an input signal per antenna into a frequency-domain signal;
the transmission-channel estimating unit, the hard-decision sequence estimating unit, and the soft-decision value creating unit, that performs soft-decision value creation processing according to any one of claims 1 to 8, by using sub-carrier signal obtained by the signal converting unit; and
a rearranging unit that rearranges a soft decision value per sub-carrier created by the soft-decision value creating unit to a serial form.

10. The receiving apparatus according to claim 1, wherein
the soft-decision value creating unit includes

a vector subtraction unit that creates a replica of a symbol containing a subject bit as a target for soft decision value creation, based on the transmission-channel response matrix and a symbol having an inverse bit of a specific bit in the hard decision sequence, and subtracts the replica from the received signal vector;
a weight creating unit that reconstructs the transmission-channel response matrix by reducing a dimension, stores therein reconstructed transmission-channel response matrix, creates a weight matrix based on the reconstructed transmission-channel response matrix, and outputs a specific row vector included in the weight matrix as a weight;

a weight multiplication unit that multiplies a subtraction result obtained by the vector subtraction unit by the weight,

a signal determination unit that determines multiplication result obtained by the weight multiplication unit based on transmission signal mapping, and estimates a sequence that a bit in the hard decision sequence is inversed based on determination result;

a likelihood creating unit that creates the second likelihood information based on the received signal vector, the transmission-channel response matrix, and the determination result obtained by the signal determination unit; and

a soft-decision value calculating unit that calculates a soft decision value based on the first likelihood information and the second likelihood information, wherein

when the vector subtraction unit receives output (signal determination output) from the signal determination unit, the vector subtraction unit creates a replica by using the signal determination output instead of the symbol having an inverse bit of a specific bit in the hard decision sequence, and subtracts the replica from a previous vector subtraction result,

when the weight creating unit stores therein a transmission-channel response matrix reconstructed by reducing a dimension, the weight creating unit creates a weight matrix based on stored reconstructed transmission-channel response matrix instead of the transmission-channel response matrix, and

the vector subtraction unit, the weight creating unit, the weight multiplication unit, and the signal determination unit perform a series of processing on all bits in the hard decision sequence, and estimate a sequence that a bit in the hard decision sequence is inversed.

11. The receiving apparatus according to claim 10, wherein the weight creating unit outputs a smallest row vector as a weight, the smallest row vector being smallest among row vectors included in the weight matrix.

12. The receiving apparatus according to claim 10, wherein the likelihood creating unit creates a replica by multiplying the transmission-channel response matrix by the determination result obtained by the signal determination unit, and creates the second likelihood information based on the replica and the received signal vector.

13. The receiving apparatus according to claim 10, wherein

the transmission-channel estimating unit further estimates information about noise power applied on the received signal vector, and

the soft-decision value creating unit further uses the information about the noise power in creation of the soft decision value.

14. The receiving apparatus according to claim 13, wherein the weight creating unit creates a weight matrix based on the reconstructed transmission-channel response matrix and the information about the noise power.

15. The receiving apparatus according to claim 10, wherein

the soft-decision value creating unit further includes a replica creating unit that creates a replica of the hard decision sequence based on the transmission-channel response matrix,

the vector subtraction unit, the weight multiplication unit, the signal determination unit, and the likelihood creating unit, perform a series of processing on replica created by the replica creating unit, and create third likelihood information,

the soft-decision value calculating unit selects one of the second likelihood information and the third likelihood information, and creates a soft decision value based on selected likelihood information and the first likelihood information.

16. The receiving apparatus according to claim 10, wherein

the hard-decision sequence estimating unit stores therein, in addition to performing a process of outputting the hard decision sequence and the first likelihood information corresponding to the hard decision sequence, likelihood information corresponding to a transmission symbol candidate calculated in the process of the processing, and

when stored likelihood information corresponding to a transmission symbol candidate having an inverse bit of a specific bit in the hard decision sequence is present, the likelihood creating unit further outputs the stored likelihood information as the second likelihood information.

17. The receiving apparatus according to claim 10, further comprising a signal decoding unit that decodes a soft decision value received from the soft-decision value creating unit repeatedly a certain number of times, wherein

the signal decoding unit creates a certain advance information to be used for repeated decoding, and outputs the advance information to the hard-decision sequence estimating unit and the soft-decision value creating unit, the hard-decision sequence estimating unit refers also to the advance information, and performs estimation processing of the hard decision sequence, and creation processing the first likelihood information corresponding to the hard decision sequence, and

the soft-decision value creating unit refers also to the advance information, and performs processing that can be performed by the likelihood creating unit and processing that can be performed by the soft-decision value calculating unit.

18. A receiving apparatus configured to be used in a system that employs one of OFDM (Orthogonal Frequency Division Multiplexing) and MC-CDMA (Multi Carrier-Code Division Multiple Access), and to demodulate a multi-carrier modulated signal received via a plurality of antennas, the receiving apparatus comprising:

a signal converting unit that converts a time-domain signal as an input signal per antenna into a frequency-domain signal;

the transmission-channel estimating unit, the hard-decision sequence estimating unit, and the soft-decision value creating unit, that performs soft-decision value creation processing according to any one of claims 10 to 17, by using sub-carrier signal obtained by the signal converting unit; and

a rearranging unit that rearranges a soft decision value per sub-carrier created by the soft-decision value creating unit to a serial form.

# FIG.1

# FIG.2

# FIG.3

HARD
DETERMINATION
SEQUENCE

RECEIVED
SIGNAL
VECTOR

TRANSMISSION-
CHANNEL RESPONSE
MATRIX

LIKELIHOOD
INFORMATION

31
VECTOR
SUBTRAC-
TION UNIT

32
WEIGHT
MULTIPLICA-
TION UNIT

33
SIGNAL
DETERMINA-
TION UNIT

34
LIKELIHOOD
CREATING
UNIT

35
SOFT-
DECISION
VALUE
CALCU-
LATING
UNIT

WEIGHT
CREATING
UNIT  36

# FIG.4

RECEIVED
SIGNAL VECTOR

21
HARD-DECISION
SEQUENCE
ESTIMATING UNIT

42
PARAMETER
ESTIMATING
UNIT

23a-1
SOFT-DECISION
VALUE
CREATING UNIT

23a-K
SOFT-DECISION
VALUE
CREATING UNIT

# FIG.5

HARD
DETERMINATION
SEQUENCE →

RECEIVED
SIGNAL
VECTOR →

| 31 VECTOR SUBTRAC-TION UNIT | → | 32 WEIGHT MULTIPLICA-TION UNIT | → | 33 SIGNAL DETERMINA-TION UNIT | → | 34 LIKELIHOOD CREATING UNIT | → | 35 SOFT-DECISION VALUE CALCU-LATING UNIT | → |

WEIGHT
CREATING
UNIT    36a

TRANSMISSION-CHANNEL
RESPONSE MATRIX

NOISE POWER INFORMATION

LIKELIHOOD INFORMATION

# FIG.6

HARD
DETERMINATION
SEQUENCE

51 REPLICA
CREATING
UNIT

RECEIVED
SIGNAL
VECTOR

| 316 VECTOR SUBTRAC-TION UNIT | → | 326 WEIGHT MULTIPLICA-TION UNIT | → | 336 SIGNAL DETERMI-NATION UNIT | → | 346 LIKELIHOOD CREATING UNIT | → | 356 SOFT-DECISION VALUE CALCU-LATING UNIT | → |

WEIGHT
CREATING
UNIT    36a

TRANSMISSION-
CHANNEL
RESPONSE
MATRIX

NOISE POWER INFORMATION

LIKELIHOOD INFORMATION

19

# FIG.7

RECEIVED
SIGNAL
VECTOR

21c

HARD-
DECISION
SEQUENCE
ESTIMATING
UNIT

42

PARAMETER
ESTIMATING
UNIT

23c-1

SOFT-DECISION
VALUE
CREATING UNIT

23c-K

SOFT-DECISION
VALUE
CREATING UNIT

61

MEMORY UNIT

# FIG.8

HARD
DETERMINATION
SEQUENCE

RECEIVED
SIGNAL
VECTOR

31

VECTOR
SUBTRAC-
TION UNIT

32

WEIGHT
MULTIPLICA-
TION UNIT

33

SIGNAL
DETERMINA-
TION UNIT

64

MEMORY
REFERRING
DEVICE

35c

SOFT-
DECISION
VALUE
CALCU-
LATING
UNIT

34c

LIKELIHOOD
CREATING
UNIT

NOISE POWER
INFORMATION

TRANSMISSION-
CHANNEL
RESPONSE MATRIX

36a

WEIGHT
CREATING
UNIT

LIKELIHOOD INFORMATION

# FIG.9

# FIG.10

# FIG.11

HARD
DETERMINATION
SEQUENCE →

RECEIVED
SIGNAL
VECTOR →

```
31                    32                   33                  34d                   35
VECTOR      →  WEIGHT        →  SIGNAL        →  LIKELIHOOD   →  SOFT-
SUBTRAC-       MULTIPLICA-      DETERMINA-       CREATING        DECISION
TION UNIT      TION UNIT        TION UNIT        UNIT            VALUE
                                                                CALCU-
                                                                LATING
                                                                UNIT        →
```

WEIGHT
CREATING
UNIT    36

TRANSMISSION-CHANNEL
RESPONSE MATRIX

ADVANCE
INFORMATION

LIKELIHOOD
INFORMATION

# FIG.12

```
10-1          11-1              12-1            81-1           13e                82
  ANALOG-         A/D CON-      FFT                DIGITAL-         PARALLEL-
  SIGNAL          VERTING       UNIT               SIGNAL           SERIAL
  PROCESSING      UNIT                             DEMODU-          CONVERTING
  UNIT                                             LATION           UNIT
                                                   UNIT

10-N          11-N              12-N            81-1
  ANALOG-         A/D CON-      FFT
  SIGNAL          VERTING       UNIT
  PROCESSING      UNIT
  UNIT
```

DEINTER-LEAVE UNIT  →  DECODING
UNIT    →

14                     15

# FIG.13

HARD
DETERMINATION
SEQUENCE

RECEIVED
SIGNAL
VECTOR

31f

VECTOR
SUBTRAC-
TION UNIT

32

WEIGHT
MULTIPLICA-
TION UNIT

33f

SIGNAL
DETERMINA-
TION UNIT

34

LIKELIHOOD
CREATING
UNIT

35

SOFT-
DECISION
VALUE
CALCU-
LATING
UNIT

WEIGHT
CREATING
UNIT

36f

TRANSMISSION-
CHANNEL RESPONSE
MATRIX

LIKELIHOOD
INFORMATION

## INTERNATIONAL SEARCH REPORT

| International application No. |
|---|
| PCT/JP2006/317998 |

A. CLASSIFICATION OF SUBJECT MATTER
*H04J15/00*(2006.01)i, *H04B1/707*(2006.01)i, *H04B7/08*(2006.01)i, *H04J1/02* (2006.01)i, *H04J11/00*(2006.01)i

According to International Patent Classification (IPC) or to both national classification and IPC

B. FIELDS SEARCHED

Minimum documentation searched (classification system followed by classification symbols)
H04J15/00, H04B1/707, H04B7/08, H04J1/02, H04J11/00

Documentation searched other than minimum documentation to the extent that such documents are included in the fields searched
Jitsuyo Shinan Koho             1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
IEEE

C. DOCUMENTS CONSIDERED TO BE RELEVANT

| Category* | Citation of document, with indication, where appropriate, of the relevant passages | Relevant to claim No. |
|---|---|---|
| P,X | Masashi HIGASHINAKA, Akihiro OKAZAKI, Katsuyuki MOTOYOSHI, Takayuki NAGAYASU, Hiroshi KUBO, Akihiro SHIBUYA, "Enzanryo Sakugen Saiyu Hanteiho o Mochiita MIMO System ni okeru Nanhanteichi Seisei ni Kansuru Kento", 13 October, 2005 (13.10.05), RCS-2005-91, Vol.105, No.356, pages 37 to 42 | 1-18 |
| A | Masashi HIGASHINAKA, Akihiro OKAZAKI, Katsuyuki MOTOYOSHI, Takayuki NAGAYASU, Hiroshi KUBO, Akihiro SHIBUYA, "MIMO System ni okeru Doitsu Channel Kansho Jokyo ni Kansuru Kento", 07 September, 2005 (07.09.05), Denshi Joho Tsushin Society Taikai Ronbunshi, page 413 | 1-18 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 December, 2006 (06.12.06) | 19 December, 2006 (19.12.06) |

| Name and mailing address of the ISA/ | Authorized officer |
|---|---|
| Japanese Patent Office |  |
| Facsimile No. | Telephone No. |

Form PCT/ISA/210 (second sheet) (April 2005)

<div style="text-align:center">**INTERNATIONAL SEARCH REPORT**</div>

| | International application No. |
|---|---|
| | PCT/JP2006/317998 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-229269 A (Denshi Buhin Kenkyuin), 12 August, 2004 (12.08.04), Par. Nos. [0061] to [0065] & KR 4067707 A & CN 1518261 A & US 2004/0146116 A1 | 1-18 |
| A | Honjo, K. Ohtsuki, T., "Computational complexity reduction of MLD based on SINR in MIMO spatial multiplexing systems" 2004.09.29, In: Vehicular Technology Conference 2004 fall, Vol.2, pp.1426-1430 | 1-18 |
| A | Higuchi, K. Kawai, H. Maeda, N. Sawahashi, M. Itoh, T., "Likelihood function for QRM-MLD suitable for soft-decision turbo decoding and its performance for OFCDM MIMO multiplexing in multipath fading channel" 2004.09.08, In:Personal, Indoor and Mobile Radio Communications, 2004, Vol.2, pp.1142-1148 | 1-18 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2406760 A

**Non-patent literature cited in the description**

- **EMANUELE VITERBO ; JOSEPH BOUTROS.** A Universal Lattice Code Decoder for Fading Channels. *IEEE Transactions on Information Theory,* July 1999, vol. 45 (5), 1639-1642